# EUROPEAN PATENT SPECIFICATION

(11) **EP 1 084 968 B1**
(45) Date of publication and mention of the grant of the patent: **17.07.2002**
(21) Application number: 00103036.0
(22) Date of filing: 15.02.2000
(51) Int. Cl.: B65G 47/64, B65G 47/71, B65G 47/84, B65G 15/14

(54) **Device for sorting products**
Vorrichtung zum Sortieren von Produkten
Dispositif pour trier des produits

(30) Priority: 17.09.1999 IT TO990794
(43) Date of publication of application: 21.03.2001
(73) Proprietor: Casmatic S.p.A., 40033 Casalecchio di Reno, Bologna (IT)
(72) Inventor: Marchetti, Dionisio, c/o Casmatic Spa, 40033 Casalecchio (IT); Cassoli, Stefano, c/o Casmatic Spa, 40033 Casalecchio (IT); Gorrieri, Giordano, c/o Casmatic Spa, 40033 Casalecchio (IT)
(74) Representative: Marchitelli, Mauro

(56) References cited:
- EP-A- 0 165 127
- DE-A- 1 611 843
- FR-A- 1 173 629
- IT-B- 1 187 354
- US-A- 5 492 216

## Description

This invention relates to a device for sorting at least one row of products advancing in their direction of alignment into at least two rows of products.

Devices of this type are especially used in automatic packaging lines in which machines presenting different production rates are arranged respectively in series or in parallel. In particular, in the paper reel production field, frequently one reel making machine (comprising, for example, a re-reeling machine and a parting tool) feeds several packing machines and, in this case, a sorting device is arranged between the reel making machine and the packaging machines.

A known sorting device is described in Italian patent no. 1187354. This known device comprises a set of feeding channels, a set of receiving channels and a sorting device equipped with mobile guards for selectively directing the products from each feeding line towards two or more reception channels arranged side by side on a horizontal surface. The main problem of this solution relates to the large dimensions of the device due to the fact that often there is a high number of receiving channel arranged side by side on a horizontal surface.

In other known solutions, the sorting device comprises a table turning on a horizontal axis which sorts the products from a feeding conveyor onto two overlapping receiving conveyors. However, sorting devices of this kind present problems related to the heavy weight of the turning table. Furthermore, the sorting devices with turning table are not very flexible in operation because, in general, these devices do not allow to convey different quantities of products to the overlapping conveyors. A greater flexibility could only be attained with considerable complications from a construction point of view.

DE-A-16 11 843 discloses a device according to the preamble of claim 1, specifically designed for sorting cans of magnetic material. This known device includes a first, a second and a third conveyor and an electromagnet forming a pick-up and transfer device forming a bridge between the first and third conveyor. When the electromagnet is turned off the products coming from the first conveyor proceed to the second conveyor. When the electromagnet in turned on the products coming from the first conveyor are picked by the electromagnet and transferred to the third conveyor.

A problem of the solution disclosed in DE-A-16 11 483 is that it is necessary to leave a substantial spacing between the products in order to be able to individually sort the various products. In fact, it is not possible to turn off the electromagnet until a product already picked up has reached the third conveyor and a product spaced out from the preceding one of a distance less than the length of the magnet would be automatically picked up before the electromagnet is turned off.

In order to overcome the above problems, the present invention relates to a sorting device according to claims 1 to 5.

This invention will be illustrated with reference to a preferred embodiment as non-limiting examples in the enclosed drawings, wherein:
- figure 1 is a schematic lateral view of a sorting device according to this invention,
- figure 2 is a plan view according to arrow II in figure 1,
- figure 3 is a large scale section according to the line III-III in figure 2,
- figures 4 and 5 are large scale cross-section according to line IV-IV in figure 2, in two different operative configurations, and
- figure 6 is a schematic side view of another embodiment of the sorting device according to this invention.

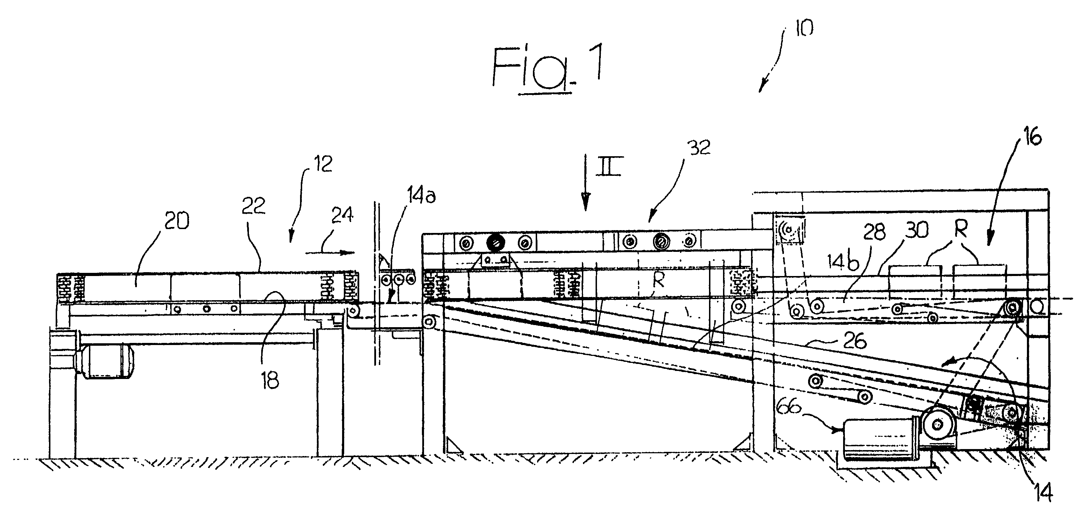

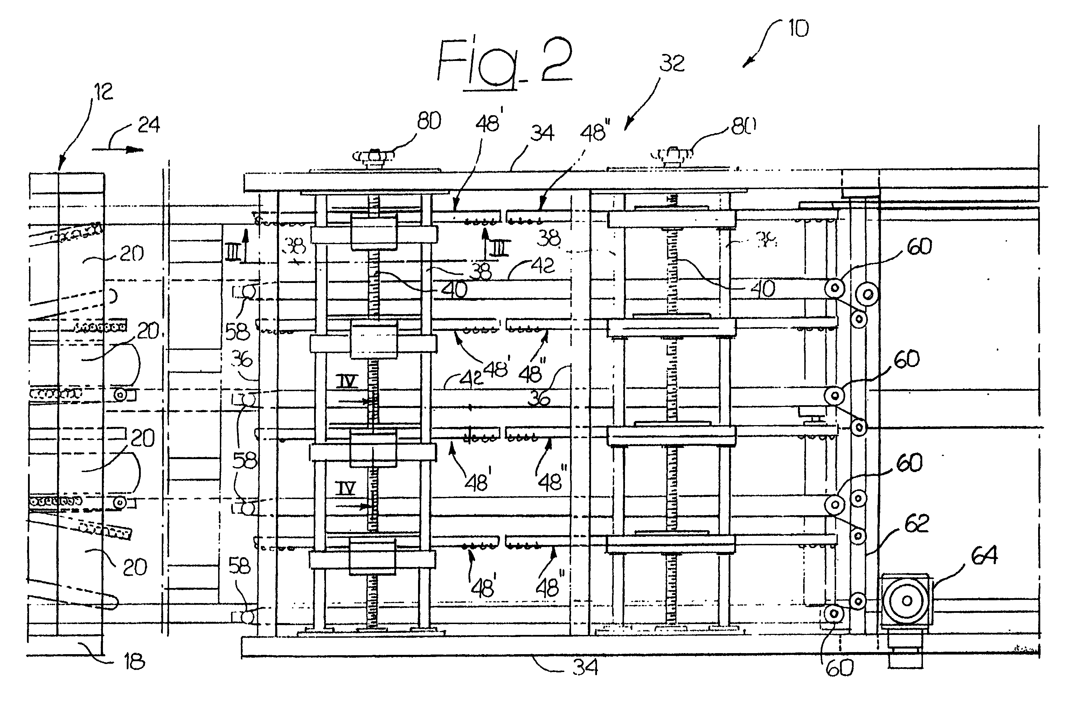

With reference to figures 1 and 2, reference 10 indicates a sorting device according to this invention. The device 10 comprises a first conveyor 12, a second conveyor 14 and a third conveyor 16. Each of said conveyors comprise guiding and driving devices to advance one or more rows of products in the direction of advancement. The first conveyor 12 comprises a horizontal sliding surface 18 and a plurality of channels 20 each of which has at least two vertical walls 22 formed, respectively, by a driven conveyor belt and by an idle roller surface. The conveyor belt moves the products aligned inside the channel 20 in the direction of advancement indicated by arrow 24 in figure 1.

In the embodiment illustrated as example in the figures, the device 10 is set up to handle and sort paper reels R, which can be arranged with their longitudinal axis parallel and orthogonal to the direction of advancement. The first conveyor 12 can, for example, be configured so to receive two rows of products from a reel making machine (not illustrated) and to sort the products on four respectively parallel channels arranged on the sliding surface 18. This first product sorting procedure is carried out according to methods which lie out of the scope of this invention. The sorting device 10 receives the reels R on four rows and sorts them in the way described in detail below on eight rows of reels advancing in their direction of alignment on the conveyors 14 and 16. Naturally, the number of rows of products which are sorted can be varied according to requirements. It is understood that this invention can be applied to any number of rows and to any typology of products.

The second conveyor 14, for example, comprises a conveyor belt including an initial straight section 14a aligned with the sliding table 18 of the first conveyor 12 and a section which is slanted downwards 14b. A plurality of respectively parallel guiding walls 26 delimiting the guiding channels for the reels R advancing on the conveyor 14 are arranged along the slanted section 14b. The guiding channels of the second conveyor 14 are essentially aligned with the channels 20 of the first conveyor 12.

The third conveyor 16 comprises a sliding surface 28 and a plurality of channels delimited over the sliding surface 28. Each channel comprises a vertical conveyor belt 30 facing a respective vertical rolling wall with idle rollers. In any case, the constructive details of the conveyors 12, 14 and 16 only marginally affect this invention, the important aspect being that such conveyors are capable of advancing the respective rows of products in their direction of alignment.

The third conveyor 16 is distanced from the first conveyor 12 and a transfer device 32 is arranged between the tail of the first conveyor 12 and the head of the third conveyor 16. The transfer device 32 comprises a plurality of channels, each of which is aligned with the respective channels of the first conveyor and of the third conveyor 12, 16. According to this invention, the transfer device 32 is equipped with pick-up devices, which can selectively be activated or deactivated, arranged in such a way that when the pick-up devices are deactivated, the reels R from the first conveyor 12 advance along the slanted section 14b of the second conveyor 14 and when the pick-up devices of the transfer device 32 are active, the reels R from the first conveyor 12 are taken by the transfer device 32 and placed on the head of the third conveyor 16.

A first embodiment of the transfer device 32 will be described below with reference to figures from 2 to 5. In this first embodiment, the transfer device 32 comprises a stationary frame with two longitudinal bars 34 joined by two or more crossbars 36. The longitudinal bars 34 also present two pairs of guiding rods 38 and two adjustment screws 40 each of which is free to turn with respect to the longitudinal bars 34 and is connected to the longitudinal bars in the direction of its longitudinal axis.

In the embodiment illustrated in the figures, the transfer device 32 comprises four transfer channels 42 each of which comprises two vertical walls respectively formed by a driven conveyor belt 46 and by an idle roller bed 48. Each conveyor belt 46 comprises a stationary supporting structure 50 holding a plurality of idle rollers 52 on which a continuous belt 54 is free to turn, co-operating with an idle transmission pulley 58 and with a driven pulley 60 (figure 2, 4 and 5). With reference to figure 2, the driven pulleys 60 of the various conveyor belts 46 are preferably turned by a single belt 62 receiving movement from an angular transmission device 64 which is operated by a drive unit indicated with 66 in figure 1. The same drive unit 66 also moves the conveyor belt 14 and the third conveyor 16.

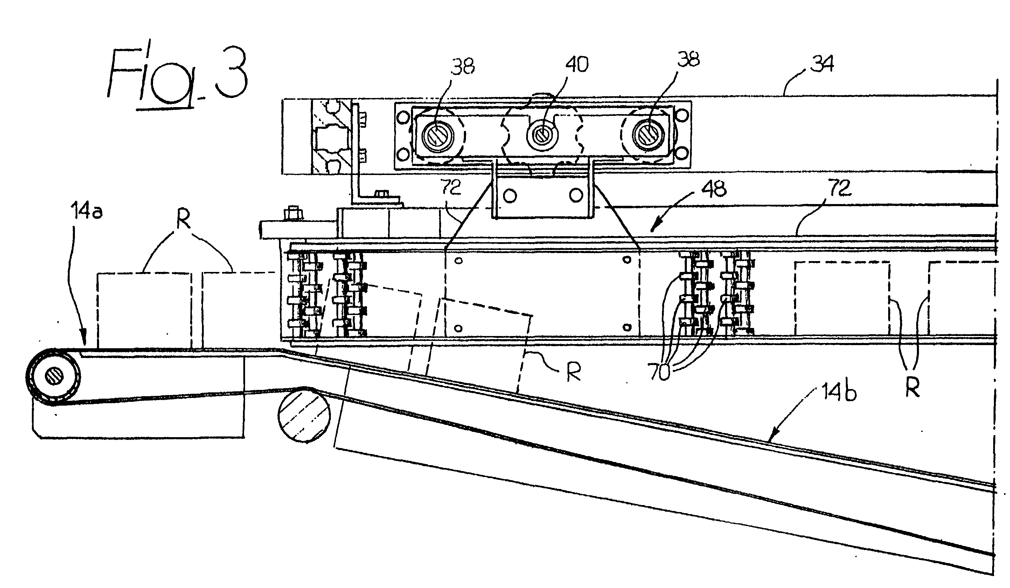

With reference to figures 3, 4 and 5, the sliding surface 38 of each transfer channel 42 comprises a supporting structure 68 holding a plurality of idle rollers 70. The supporting structure 68 is held by a plate 72 fastened to a pair of stems 74 of a hydraulic actuator 76 connected to a worm screw 78 engaging the adjustment screw 40. Each transfer channel 42 is equipped with an actuator 76, which is fitted so to slide along the transversal guides 38 (figure 2).

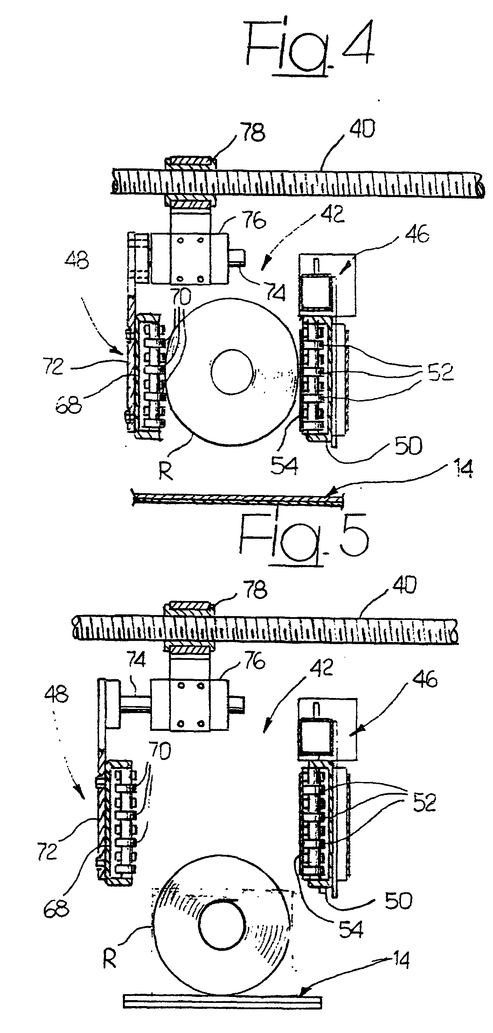

With reference to figures 4 and 5, when the actuator 76 is retracted (figure 4), the distance between the belt 54 and the sliding surface formed by rollers 70 is slightly smaller than the diameter of a reel R. In this condition, the reels R from the first conveyor 12 are taken by the transfer device 32 and transferred to the third conveyor 16.

With reference to figure 5, when the actuator 76 of a transfer channel 42 is extended, the distance between the conveyor belt 54 and the rollers 70 is larger than the diameter of a reel R. Consequently, when one of the transfer channel 42 is in this operative condition, the row of reels from the associated channel of the first conveyor 12 is not taken by the transfer device and continues along the slanted section 14a of the second conveyor 14.

Consequently, the transfer device 32 allows to selectively convey the reels R either to the second or to the third conveyor device, thus sorting a layer of products formed by one or two parallel lines into two or more overlapping layers with either the same or a different number of rows of products. The transfer device 32 presents considerable operative flexibility as concerns the number of products to be conveyed to the upper layer or to the lower layer. This is because each transfer channel 42 is equipped with a specific actuator 76 and the device 32 is able to convey either all the products from the conveyor 12 to the upper layer, or all the products to the lower layer, or part of the products to the upper layer and part of the products to the lower layer.

With reference to figure 2, the roller beds 48 are preferably split into two sectors, respectively indicated with references 48' and 48". The sectors 48' are connected to the actuators 76 and allow to select the pick-up or release condition of the respective transfer channel 42, according to the operative position of the actuators 76. The sectors 48", on the other hand, extend the transfer route of the products R which were taken by the device 32. The only purpose of splitting the roller beds 48 into two sections is to reduce the weight of the parts which are moved by the actuators 76. The transfer device 32 can be rapidly adapted to products R with a different diameter by manually operating the knobs 80 fastened onto the adjustment screws 40. The position of the sectors 48', 48" with respect to the respective conveyor belts 54 can be varied at the same time by turning the screws 40 to adapt in this way the dimension of the transfer channels 42 to the dimension of the products R.

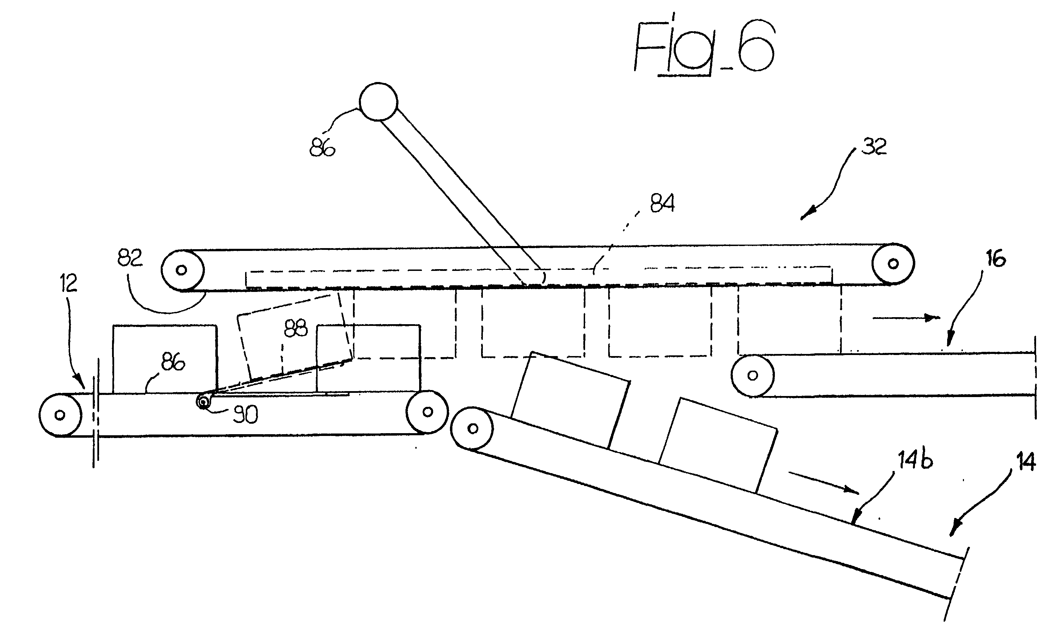

A second embodiment of the transfer device 32 according to this invention will be described with reference to figure 6. The parts corresponding to those described above are referred to with the same numbers.

In this second embodiment, the transfer device 32 comprises a perforated or porous conveyor belt 82 with a lower horizontal length facing the conveyors 12, 14 and 16. The lower length of the conveyor belt 82 faces a stationary header 84 connected to a vacuum source schematically referred to as 86.

The first conveyor 12 comprises a conveyor belt 86 and a baffle 88 hinged on a horizontal axis 90 which can selectively move from a lowered position, illustrated with a solid line, to a lifted position, illustrated with a dotted line. The lower length of the conveyor belt 82 is distanced from the upper length of the conveyor belt 86 more than the height of the products R and the vacuum produced by the header 84 is not able to lift the products R on the conveyor 12. In any case, such vacuum is able to hold the products R on the conveyor belt 82 after the products R are put into contact with the surface of the belt 82. The baffle 88 selectively takes the products R into contact with the conveyor belt 82 so that the products are taken by the suction action of the header 84 and carried to the third conveyor 16. When the baffle is down, the products R are not taken by the transfer device 32 and advance along the downwards slanted section 14b of the second conveyor 14.

## Claims

1. A device for sorting products (R) advancing on at least one line onto two or more lines, comprising:
- first conveyors (12) to advance at least one row of products (R) in the direction of alignment (24),
- second and third conveyors (14, 16) to receive the respective rows of products and advance the respective rows in their direction of alignment, and
- sorting devices to selectively convey the products in the first row to the second or to the third conveyors (14, 16), said sorting devices comprising a pick-up and transfer device (32) extending along a slanted route with respect to the second conveyors (14, 16), the pick-up and transfer device (32) being capable of selectively taking single products (R) reciprocally distanced in the direction of advancement and transferring them to said third conveyors (16),
**characterised in that** it comprises at least one bottom less transfer channel (42) which can selectively switch from a pick-up configuration to a release configuration for the products (R) and vice versa, arranged in such a way that when the transfer channel (42) is in the pick-up configuration the products (R) advancing along the first conveyor are picked-up by said transfer device (32) and when the transfer channel is in the release configuration the products (R) from the first conveyor advance along the second conveyor, said transfer channel (42) comprising two parallel side walls (46, 48) at least one of which is associated to driving devices (54) to advance the products (R) along the channel (42), actuating devices (76) being arranged to vary the distance between said walls (46, 48) from a value corresponding to said pick-up condition and a value corresponding to said release condition and vice versa.

2. A device according to claim 1, **characterised in that** at least one of said walls is formed by a roller bed (48) or by a belt (54).

3. A device according to claim 2, **characterised in that** said roller bed (48) is driven by a linear actuator (76) capable of assuming two operative positions corresponding to said pick-up and release conditions.

4. A device according to claim 3, **characterised in that** it comprises a screw and worm screw device (40, 78) for adjusting the distance between said walls (46, 48) to adapt them to the dimensions of the products (R).

5. A device for sorting products (R) advancing on at least one line onto two or more lines, comprising:
- first conveyors (12) to advance at least one row of products (R) in the direction of alignment (24),
- second and third conveyors (14, 16) to receive the respective rows of products and advance the respective rows in their direction of alignment, and
- sorting devices to selectively convey the products in the first row to the second or to the third conveyors (14, 16), said sorting devices comprising a pick-up and transfer device (32) extending along a slanted route with respect to the second conveyors (14, 16), the pick-up and transfer device (32) being capable of selectively taking single products (R) reciprocally distanced in the direction of advancement and transferring them to said third conveyors (16),
**characterised in that** it comprises a suction device (84) associated to a over head conveyor belt (82) capable of transferring the products (R) withheld by said suction device (84) from the first to the third conveyor (12, 16), baffles (88) being provided movable between a pick-up configuration and a release configuration, said baffles (88) being arranged in such a way that when they are in said pick-up configuration the products (R) advancing along the first conveyor are picked-up by said suction device (84) and when they are in the release configuration the products (R) from the first conveyor advance along the second conveyor.

## Patentansprüche

1. Vorrichtung zum Sortieren von Produkten (R), die auf wenigstens einer Trasse heranrücken, auf zwei oder mehr Trassen, umfassend:
- erste Förderer (12) zum Vorschieben wenigstens einer Reihe von Produkten (R) in die Einreihungsrichtung (24),
- zweite und dritte Förderer (14, 16) zum Aufnehmen der jeweiligen Produktereihen und Vorschieben der jeweiligen Reihen in ihrer Einreihungsrichtung, und
- Sortiervorrichtungen zum selektiven Fördern der Produkte in der ersten Reihe zu den zweiten oder dritten Förderern (14, 16), wobei die Sortiervorrichtungen eine Greifer- und Transportvorrichtung (32) umfassen, die sich entlang eines abgeschrägten Leitwegs bezüglich der zweiten Förderer (14, 16) erstreckt, und die Greifer- und Transportvorrichtung (32) in der Lage ist, wechselweise in Vorschubrichtung beabstandete einzelne Produkte (R) selektiv aufzunehmen und sie zu den dritten Förderern (16) zu überführen,
**dadurch gekennzeichnet, daß**
sie wenigstens eine bodenlose Zubringerspur (42) umfaßt, die selektiv von einer Aufnahme-Anordnung auf eine Freigabe-Anordnung und umgekehrt für die Produkte (R) umschalten kann und derart angeordnet ist, daß wenn die Zubringerspur (42) in der Aufnahme-Anordnung ist, die längs des ersten Förderers vorrückenden Produkte (R) von der Transportvorrichtung (32) aufgenommen werden, und wenn die Zubringerspur in der Freigabe-Anordnung ist, die Produkte (R) vom ersten Förderer längs des zweiten Förderers vorrücken, wobei die Zubringerspur (42) zwei parallele Seitenwände (46, 48) umfaßt, von denen wenigstens eine Antriebsvorrichtungen (54) zugeordnet ist, um die Produkte (R) längs der Spur (42) vorzuschieben, wobei Betätigungsvorrichtungen (76) angeordnet sind, um den Abstand zwischen den Wänden (46, 48) von einem Wert entsprechend der Aufnahmebedingung auf einen Wert entsprechend der Freigabebedingung abzuändern und umgekehrt.

2. Vorrichtung gemäß Anspruch 1, **dadurch gekennzeichnet, daß** wenigstens eine der Wände durch einen Rollgang (48) oder ein Band (54) gebildet ist.

3. Vorrichtung gemäß Anspruch 2, **dadurch gekennzeichnet, daß** der Rollgang (48) durch ein lineares Betätigungselement (76) angetrieben ist, das in der Lage ist, zwei Arbeitsstellungen entsprechend der Aufnahmeund der Freigabebedingung anzunehmen.

4. Vorrichtung gemäß Anspruch 3, **dadurch gekennzeichnet, daß** sie eine Spindel- und Schneckenschraubenvorrichtung (40, 78) zum Einstellen des Abstands zwischen den Wänden (46, 48) umfaßt, um sie an die Abmessungen der Produkte (R) anzupassen.

5. Vorrichtung zum Sortieren von Produkten (R), die auf wenigstens einer Trasse heranrücken, auf zwei oder mehr Trassen, umfassend:
- erste Förderer (12) zum Vorschieben wenigstens einer Reihe von Produkten (R) in die Einreihungsrichtung (24),
- zweite und dritte Förderer (14, 16) zum Aufnehmen der jeweiligen Produktereihen und Vorschieben der jeweiligen Reihen in ihrer Einreihungsrichtung, und
- Sortiervorrichtungen zum selektiven Fördern der Produkte in der ersten Reihe zu den zweiten oder dritten Förderern (14, 16), wobei die Sortiervorrichtungen eine Greifer- und Transportvorrichtung (32) umfassen, die sich entlang eines abgeschrägten Leitwegs bezüglich der zweiten Förderer (14, 16) erstreckt, und die Greifer- und Transportvorrichtung (32) in der Lage ist, wechselweise in Vorschubrichtung beabstandete einzelne Produkte (R) selektiv aufzunehmen und sie zu den dritten Förderern (16) zu überführen,
**dadurch gekennzeichnet, daß**
sie eine Ansaugvorrichtung (84) umfaßt, die einem Überkopf-Förderband (82) zugeordnet ist, das in der Lage ist, die von der Ansaugvorrichtung (84) einbehaltenen Produkte (R) von dem ersten zu dem dritten Förderer (12, 16) zu überführen, wobei Ablenkbleche (88) vorgesehen sind, die zwischen einer Aufnahme-Anordnung und einer Freigabe-Anordnung beweglich sind, und die Ablenkbleche (88) derart angeordnet sind, daß wenn sie in der Aufnahme-Anordnung sind, die längs des ersten Förderers vorrückenden Produkte (R) von der Ansaugvorrichtung (84) aufgenommen werden, und wenn sie in der Freigabe-Anordnung sind, die Produkte (R) vom ersten Förderer längs des zweiten Förderers vorrücken.

## Revendications

1. Un dispositif de triage pour les articles (R) avançant au moins sur une ligne, voire deux ou plus, comprenant :
- les premiers convoyeurs (12) qui font avancer au moins une rangée d'articles (R) dans le sens de l'alignement (24),
- les deuxièmes et troisièmes convoyeurs (14, 16) qui reçoivent les rangées respectives d'articles et les font avancer dans le sens de leur alignement, et
- des dispositifs de triage pour transporter sélectivement les articles dans la première rangée vers les deuxièmes ou troisièmes convoyeurs (14, 16), lesdits dispositifs de triage comprenant un dispositif de préhension et de transfert (32) s'étendant le long d'un chemin incliné par rapport aux deuxièmes convoyeurs (14, 16), le dispositif de préhension et de transfert (32) étant en mesure de prendre sélectivement des articles (R) distanciés réciproquement dans le sens de l'avancement et de les transférer vers les troisièmes convoyeurs (16),
**caractérisé par le fait qu'**il comprend au moins une voie de transfert sans fond (42) pouvant sélectivement passer d'une configuration de préhension à une configuration de pose pour les articles (R) et vice versa, positionnée de telle manière que quand la voie de transfert (42) se trouve en position de préhension, les articles (R) avançant le long du premier convoyeur sont pris par ce dispositif de transfert (32) et que quand la voie de transfert (42) se trouve en configuration de pose, les articles (R) avancent du premier convoyeur vers le deuxième, ladite voie de transfert (42) comprenant deux parois parallèles (46, 48) dont une au moins est associée aux dispositifs de commande (54) pour faire avancer les articles (R) le long de la voie (42), des dispositifs d'actionnement (76) étant positionnés pour varier la distance entre lesdites parois (46, 48) d'une valeur correspondant à ladite condition de préhension à une valeur correspondant à ladite condition de pose et vice versa.

2. Un dispositif selon la revendication 1, **caractérisé en ce qu'**au moins une desdites parois est formée par un transporteur à rouleaux ou à courroie (54).

3. Un dispositif selon la revendication 2, **caractérisé en ce que** ledit transporteur à rouleaux (48) est commandé par un vérin linéaire (76) pouvant prendre deux positions d'opération correspondant aux dites conditions de préhension et de pose.

4. Un dispositif selon la revendication 3, **caractérisé en ce qu'**il comprend un dispositif à vis et à vis sans fin (40, 78) pour régler la distance entre lesdites parois (46, 48) de manière à les adapter aux dimensions des articles (R).

5. Un dispositif pour trier les articles (R) avançant au moins sur une ligne, voire deux ou plus, comprenant :
- les premiers convoyeurs (12) qui font avancer au moins une rangée d'articles (R) dans le sens de l'alignement (24),
- les deuxièmes et troisièmes convoyeurs (14, 16) qui reçoivent les rangées respectives d'articles et les font avancer dans le sens de leur alignement, et
- des dispositifs de triage pour transporter sélectivement les articles dans la première rangée vers les deuxièmes ou troisièmes convoyeurs (14, 16), lesdits dispositifs de triage comprenant un dispositif de préhension et de transfert (32) s'étendant le long d'un chemin incliné par rapport aux deuxièmes convoyeurs (14, 16), le dispositif de préhension et de transfert (32) étant en mesure de prendre sélectivement des articles (R) distanciés réciproquement dans le sens de l'avancement et de les transférer vers les troisièmes convoyeurs (16),
**caractérisé par le fait qu'**il comprend un dispositif d'aspiration (84) associé à un convoyeur à courroie au-dessus du sol (82) capable de transférer les articles (R) retenus par ledit dispositif d'aspiration (84) du premier convoyeur au troisième (12, 16), les déflecteurs (88) fournis pouvant se déplacer entre une configuration de préhension et une configuration de pose, lesdits déflecteurs (88) étant positionnés de telle manière que quand ils sont en configuration de préhension, les articles (R) avançant le long du premier convoyeur sont collectés par ledit dispositif d'aspiration (84) et que quand ils sont en configuration de pose, les articles (R) avancent du premier convoyeur le long du deuxième.
